# EUROPEAN PATENT SPECIFICATION

(11) **EP 3 495 234 B1**
(45) Date of publication and mention of the grant of the patent: **02.02.2022**
(21) Application number: 18210274.9
(22) Date of filing: 04.12.2018
(51) Int. Cl.: B62D 1/184

(54) **STEERING COLUMN ASSEMBLY**
LENKSÄULENANORDNUNG
ENSEMBLE DE COLONNE DE DIRECTION

(30) Priority: 06.12.2017 EP 17461641; 22.01.2018 GB 201801003
(43) Date of publication of application: 12.06.2019
(73) Proprietor: ZF Steering Systems Poland Sp. Z o.o., 43-502 Czechowice-Dziedzice (PL)
(72) Inventor: WOJTALIK, Artur, 40-719 Katowice (PL); PONIKIEWSKI, Pawel, 34-331 Pewel Mala (PL)
(74) Representative: Barker Brettell LLP

(56) References cited:
- WO-A1-2009/007709
- JP-A- 2012 035 657

## Description

This invention relates to improvements in steering column assemblies, and to a mounting bracket for use in a steering column assembly.

It is known to provide a steering column assembly for an automotive vehicle that can be adjustable for rake and in many cases also for reach. This requires the column shroud, within which the steering column shaft attached to the steering wheel is rotatably located, to be fixed to the vehicle by a clamp mechanism which can be clamped and released to either prevent or permit adjustment of the column shroud position respectively.

One common arrangement uses a telescopic column shroud which comprises an upper shroud portion and a lower shroud portion. Each portion comprises a tube with the end of one tube, usually the upper shroud portion that is nearest the steering wheel, able to slide over an end of the other portion to permit reach adjustment. One of the shroud portions is secured to a support bracket by the releasable clamp mechanism. Rake adjustment can be achieved by providing a mounting bracket which includes a generally vertically extending slot along which a part of the clamp mechanism can slide up and down when unclamped. If reach adjustment is also needed this can be simply achieved by providing a generally horizontal slot in the fixing rail a portion of the clamp mechanism can slide along when unclamped.

A known arrangement for use in restricted spaces utilises a bracket in the form of an inverted U-shape having two arms depending from a main body which have the vertical slots formed therein. The clamp mechanism includes a bolt which passes through these slots to link the arms together and a fixing rail welded to the column shroud is located between the arms. Clamping of the clamp mechanism draws the arms together to squeeze them onto the fixing rail.

In many cases, it is a requirement for a positive lock to be achieved between the shroud and the mounting bracket, the vehicle specifier considering a simple frictional engagement to be insufficient. To achieve this, it is known to provide a rack of teeth alongside the slot in one arm of the mounting bracket that engages teeth of a moving part of the clamp mechanism when the clamp mechanism is clamped. When the clamp mechanism is unclamped the moving teeth are held clear of the rack of teeth to allow the clamp mechanism to slide along the slot.

It is important to ensure that the mounting bracket is relatively rigid so that the steering column shroud does not move around as the vehicle is driven. To do this, the mounting arms must be relatively rigid. However, making the arms rigid introduce a problem where the force required to move the clamp mechanism may vary depending on the chosen rake position. The reason for this is that the line through with the clamp force passes will move up and down the mounting arm according to the selected rake position. The force required to squeeze the arms together when the clamp mechanism is at the end of the slot furthest from the main body of the mounting bracket will be lower than it is when the clamp mechanism is at the end of the slot nearest the main body of the mounting bracket.

It is known from WO2007/026224 to provide for a bracket in which one arm comprises inner and outer leaves. The outer leaf extends down from the main body of the mounting bracket, and the inner leaf is fixed to the free end of the outer leaf and extends back up towards the main body. The clamp acts between the inner leaf and the other arm of the bracket. The function of the inner/outer leaves is to reduce variations in clamping force that arise during rake adjustment due to the clamp acting at different points along the clamp bracket arms. Both the inner and outer leaves can be made to flex such that changes in spring force of one leaf cancel out changes in the other as the clamp mechanism moves up and down.

This solution however still requires both the inner leaf and outer leaf of the mounting bracket arm to flex by similar amounts, which limits the rigidity of the bracket that can be achieved. Document JP2012/035657, which is seen as the closest prior art, shows a steering column and a mounting bracket according to the preamble of claims 1 and 9 respectively.

According to the invention there is provided a steering column assembly comprising a steering column shroud which surrounds a steering shaft for a steering wheel, a mounting bracket which is fixed in position relative to a part of vehicle, and a clamp mechanism which is movable between a clamped position in which the clamp mechanism fixes the shroud in position relative to the mounting bracket and a released position in which the clamp mechanism permits movement of the shroud relative to the mounting bracket, in which the mounting bracket comprises a generally U-shaped member with two depending bracket arms of the U extending from a main body to embrace a portion of the column shroud, and in which the clamp mechanism when in the clamped position squeezes the two arms of the U shaped member together thereby clamping the steering column shroud in position, in which one arm comprises an outer leaf that depends from the main body and an inner leaf which is fixed to the inside of the outer leaf facing the opposing arm, characterised in that the inner leaf and outer leaf each include a respective vertical slot along which a portion of the clamp mechanism can move when the clamp mechanism is unclamped, and in which the inner leaf is secured to the inside of the outer leaf at two or more positions that are offset to one side of the slot and arranged vertically offset from one another such that the two or more positions lie on a path that is exactly parallel, or that lies within a range of +/- 10 degrees of being parallel, to the slot.

At any given point the distance between the two curves measured at a normal to one curve is constant, or varies by no more than, say, 10 percent. Of course, if they deviate by too much the benefit of a generally uniform clamp force will be diminished.

The inner leaf may be joggled to form a hinge line that is generally vertical about which the inner leaf bends when a clamp force is applied. This may lie between the slot and the positions at which the inner leaf is secured to the outer leaf.

The slot in the inner leaf may be curved in an arc that has a constant radius with the centre of rotation of the arc centred on a pivot point around which the shroud may rotate when the clamp mechanism is unclamped, and the positions at which the inner leaf are attached to the outer leaf may lie along an arc with a larger radius that is also centred on the pivot point so as to be parallel to the slot. By this we mean that every point on the curved path is at the same fixed normal distance from the slot.

The inner leaf may only be securely fixed to the outer leaf at points that lie along that one path, so that the inner leaf forms a flap that can be bent or hinged away from the outer leaf as the clamp mechanism is clamped.

An edge of the inner leaf that is on the opposite side of the slot in the inner leaf to the positions at which the inner leaf is secured may be bent over to hook around a corresponding edge of the outer leaf. This helps prevent the inner leaf being rucked up if a side force is applied to the inner leaf.

The arc along which the inner leaf is attached to the outer leaf may be located on the side of the slot in the outer leaf that faces away from the steering wheel.

The inner and outer leaves may be connected by welding, bonding, riveting or the like along the path.

The slot in the outer leaf may be in register with the slot in the inner leaf but wider than the slot in the inner leaf. The purpose is that the clamp mechanism can pass through the slot in the outer leaf to contact a region surrounding the slot in the tab of the inner leaf.

The base of the U shaped bracket is preferably located above the steering column shroud with the arms depending vertically downwards such that the U-shape is inverted.

The clamp mechanism may include a clamp bolt that connects the inner leaf and the other arm. The bolt may comprise a shaft which may be provided with a nut or bolt head at one end with the shaft and bolt head/nut passing cleanly through an opening (such as a hole or slit) in the outer leaf yet prevented from passing through an opening in the inner leaf and continuing to pass through an opening in the other arm whereupon a means for drawing the shaft towards the other arm is provided. This may take the form of a cam which acts between the arm and a fixed nut or head fixed to the end of the shaft.

The outer leaf of the one arm may be of greater rigidity than the inner leaf, so that in use there is no significant deflection of the outer leaf as the clamp mechanism is clamped. The other arm may have the same rigidity as the outer leaf.

The inner leaf and outer leaf may each be formed from a sheet of material of a defined gauge, the gauge of the material of the outer leaf being higher than the gauge of the inner leaf. The material may comprise a metal or metal alloy.

The shroud may be telescopic and may comprise an inner member and an outer member, the inner member being at least partially received within the outer member. The arms of the U-shaped member may clamp on to an upper portion of the shroud or a lower portion, or to a fixing rail secured to an upper portion or to a lower portion. The clamp assembly may be arranged such that when the clamp is in the released position the rake of the steering column can be adjusted whilst the upper shroud portion and lower shroud portion remain fixed relative to one another. This is known as a single adjust mechanism.

Additionally, the clamp when in the released position may permit the upper shroud portion to move relative to the lower shroud portion to provide for reach adjustment, this movement being prevented when the clamp mechanism is moved to its clamped position. This is known as a double adjust mechanism. This arrangement therefore permits both rake and reach adjustment from the clamp mechanism.

In one embodiment of a double adjust mechanism the upper shroud portion, or the fixing rail, may be provided with one or more slits in the region fixed by the clamp mechanism such that the action of clamping the clamp mechanism closes the slits and so deforming the upper shroud portion so that it grips the lower shroud portion.

Of course, in an arrangement where the upper shroud portion slides into the lower shroud portion rather than over the lower shroud portion, the slots may be provided in the lower shroud portion.

The upper shroud portion and the lower shroud portion may each be substantially tubular.

According to a second aspect the invention provides a mounting bracket for a steering column assembly comprising a generally U-shaped member with two depending bracket arms extending from a main body so as to in use embrace a portion of a column shroud of the steering column assembly, and in which the clamp mechanism when in the clamped position squeezes the two arms of the U-shaped member together thereby clamping the steering column shroud in position, in which one arm comprises an outer leaf that depends from the main body and an inner leaf which is fixed to the inside of the outer leaf facing the opposing arm, characterised in that the inner leaf and outer leaf each include a respective vertical slot along which a portion of the clamp mechanism can slide when the clamp mechanism is unclamped, and in which the inner leaf is secured to the inside of the outer leaf at two or more positions that are offset to one side of the slot and arranged vertically offset from one another such that the two or more positions lie on a path that is exactly parallel, or that lies within a range of +/- 10 degrees of being parallel, to the slot.

The slot in the inner leaf may be curved in an arc that has a constant radius with the centre of rotation of the arc centred on a pivot point around which the shroud may rotate when the clamp mechanism is unclamped, and the positions at which the inner leaf are attached to the outer leaf may lie along an arc with a larger radius that is also centred on the pivot point so as to be parallel to the slot. By this we mean that each point on the curved path are at a fixed normal distance from the slot.

The inner leaf may only be connected at points that lie along that one path, so that the inner leaf forms a flap that can be bent or hinged away from the outer leaf as the clamp mechanism is clamped.

There will now be described, by way of example only, one embodiment of the present invention with reference to and as illustrated in the accompanying drawings of which:
**Figure 1** is a view from the side of an embodiment of a steering assembly in accordance with the present invention;
**Figure 2** is a view from above of the mounting bracket and clamp mechanism of the assembly of Figure 1;
**Figure 3** is a perspective view3 of the mounting bracket removed from the rest of the steering assembly for clarity;
**Figure 4** is a detailed view of one side arm of the mounting bracket and an inner leaf which carries a guide slot;
**Figure 5** shows the deflection of the inner leaf when the clamp mechanism is clamped; and
**Figure 6** shows the clamp mechanism engaging with the inner leaf in the clamp position.

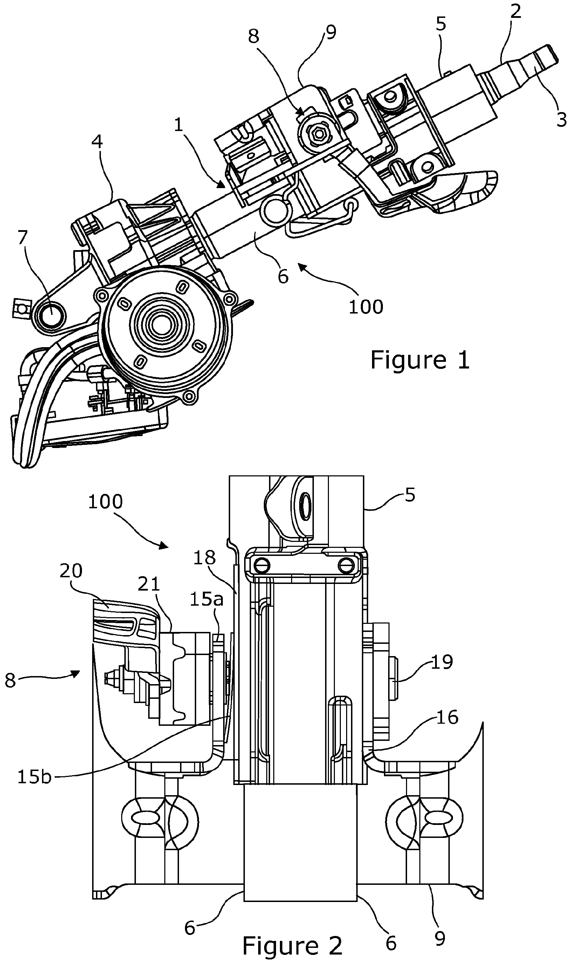

As shown in Figure 1 a steering column assembly comprises a shroud 1 which supports a steering shaft. The end of the steering shaft 2, which can be seen protruding from the shroud 1, is provided with splines 3 that enable the shaft to engage a steering wheel of a vehicle. The other end, not shown, engages a gearbox located within a housing 4. The shroud as shown has an upper portion 5 nearest the steering wheel and a lower portion 6 nearest the gearbox. The two shroud portions are tubular, and the end of the upper shroud furthest from the steering wheel is a sliding fit around an end portion of the lower shroud.

To support the shroud in a correct position for a desired reach of the steering wheel, the relative position of the upper shroud portion 5and lower shroud portion 6 must be fixed. The lower shroud portion 6 is fixed axially by the connection to the gearbox housing which in turn is fixed to the vehicle through a pivot 7. The upper shroud portion 5 can be moved up and down axially along the lower shroud portion 6. A clamp mechanism 8 can be moved between a released positon in which the upper and lower shrouds are free to move axially and a clamped position in which they are prevented from moving during normal use.

To support the shroud in a correct position for rake, the shroud is fixed to a mounting bracket 9. This mounting bracket is in turn secured to a fixed part of the vehicle, such as a cross beam, through a pair of frangible connectors 10, 11. Each connector has a first part secured to the mounting bracket and a second part secured to the cross beam, with a frangible element connecting the two. During normal use the frangible elements prevent the mounting bracket 9 moving relative to the cross beam. The clamping mechanism 8 in the released positon allows the shroud to move relative to the mounting bracket 9 by pivoting around the pivot 7. When in the clamped positon the clamp mechanism prevents the shroud moving relative to the mounting bracket 9.

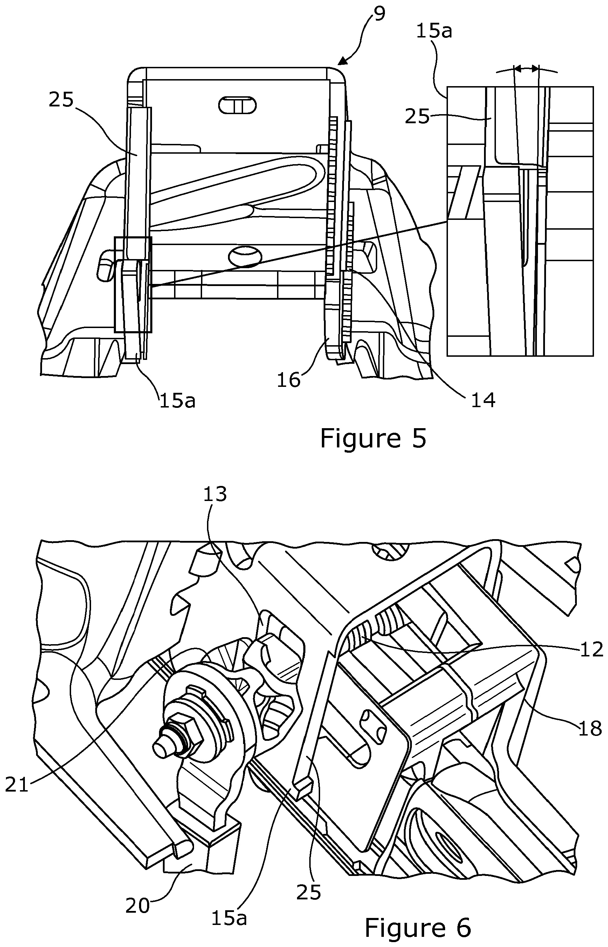

Figures 2 and 6 show the clamping mechanism 8 in more detail. It comprises a clamp pin12 that passes through elongate slots 13, 14 in two arms 15, 16 that depend from an upper main body 17 of the mounting bracket. One arm 16 comprises a single leaf, and the other arms comprises both an outer leaf 15a and an inner leaf 15b as will be described below, the inner leaf 15b being fixed to an inner face of the outer leaf 15a.

The arms 15, 16 extend down opposing sides of a rail 18that is formed on an upper surface of the upper shroud portion, and the clamp pin 12 also passes through two elongate slots in the rail. One end of the clamp pin 12 is provided with a fixed head 19 that is too large to be drawn through at least the slot in the adjacent arm 16 of the mounting bracket. The other end carries a lever 20, and a cam mechanism 21 between the lever 20 and the adjacent arm 15 of the mounting bracket. The turning of the lever 20 increases the length of the cam mechanism along the axis of the clamp pin when the clamp mechanism is clamped, and shortens the length along the axis of the clamp pin when the clamp mechanism is released. When at the longest length, the clamp mechanism squeezes the sides of the rail 18 together. This in turn closes up a slot, not shown, that extends axially along the outer shroud, causing the outer shroud to clamp onto the inner shroud. When at the shortest length, the pressure is released.

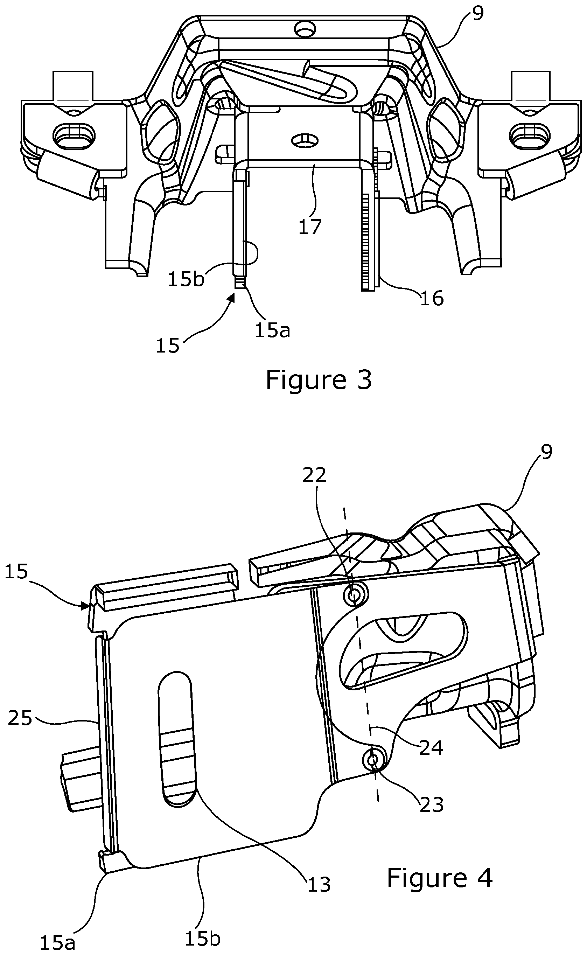

To permit rake adjustment, the slot in the arms 15, 16 extends along an arc of fixed radius, the axis of the arc lying on the pivot axis of the pivot. This can best be seen in Figure 4. The clamp pin 12 can move up and down along this vertical slot for rake adjustment. To permit reach adjustment, the slots in the rail extend along a line parallel to the axis of the shroud.

When the clamp mechanism 8 is closed, the fixed head 19 of the clamp pin 12 is pulled towards the outer face of the adjacent arm 16 of the mounting bracket. The cam mechanism, on the other hand, does not press directly onto the outermost face of the outer leaf 15a of the arm 15. Instead, it passes through a wider slot in the outer leaf 15a, to then engage with the inner leaf 15b that lies between the outer leaf 15a and the rail 18. This can be seen clearly in Figure 2 of the drawings. The mounting arms in this embodiment are therefore relatively rigid to give little deflection, with the inner leaf providing the required flexibility needed during clamping.

The inner leaf a5b can be seen best in Figures 3 and 4 of the drawings. The inner leaf 15b is secured to the outer leaf 15a of the arm of the mounting bracket 9 by two spot welds 22, 23. These welds are located to the side of the slot furthest from the steering wheel, and are arranged generally vertically with one above the other. In an ideal case the two welds lies on a path defining an arc that is offset from and runs parallel to the arc of the slot. This is indicated on the drawings by a dashed line 24. The welds 22, 23 lie on a path that shares a common radial centre with the slot in the inner leaf, which coincides with the centre line of the pivot connecting the housing 4 to the vehicle body.

The inner leaf 15b is not connected at any other point to the outer leaf, and so as the cam 21 moves to its longest length the inner leaf 15b will bend and deflect away from the outer leaf until it abuts the rail of the shroud. This is shown in Figure 2.

Also shown is a hooked end part 25of the inner leaf that passes around the generally vertical free side edge of the arm. This hooked end part helps to prevent the leaf being sheared from the outer leaf of the mounting bracket if a high side load is applied to the leaf by the clamp pin.

The inner leaf when bent can be seen in Figure 2 of the drawings. Note that at the maximum deflection shown the hook on the end of the inner leaf is still reaching around the side edge of the arm.

Placing the welds on an arc which shares the same axis as the arc of the slot ensures that the force required to bend the leaf as the clamp mechanism moves from released to the clamped positon remains consistent for all rake positions because the distance of the clamp pin from the line passing through the two spot welds remains constant. Of course, the welds may deviate slightly from this ideal arc location whilst allowing the benefit of the invention to be obtained.

## Claims

1. A steering column assembly comprising a steering column shroud (1) which surrounds a steering shaft (2) for a steering wheel, a mounting bracket (9) which is fixed in position relative to a part of vehicle, and a clamp mechanism (8) which is movable between a clamped position in which the clamp mechanism (8) fixes the shroud (1) in position relative to the mounting bracket (9) and a released position in which the clamp mechanism (8) permits movement of the shroud (1) relative to the mounting bracket (9), in which the mounting bracket (9) comprises a generally U-shaped member with two depending bracket arms of the U extending vertically down from a main body to embrace a portion of the column shroud (1), and in which the clamp mechanism (8) when in the clamped position squeezes the two arms (15, 16) of the U shaped member together thereby clamping the steering column shroud (1) in position, in which one arm comprises an outer leaf (15a) that depends from the main body and an inner leaf (15b) which is fixed to the inside of the outer leaf facing the opposing arm, wherein the inner leaf (15b) and outer leaf (15a) each include a respective vertical slot (13, 14) along which a portion of the clamp mechanism (8) can move when the clamp mechanism (8) is unclamped, and in which the inner leaf (15b) is secured to the inside of the outer leaf (15a) at two or more positions that are offset to one side of the slot and **characterised in that** each of the two or more positions are each arranged vertically offset from one another such that the two or more positions lie on a path that is exactly parallel, or that lies within a range of +/- 10 degrees of being parallel, to the slot.

2. A steering column assembly according to claim 1 in which the slot in the inner leaf (15b) is curved in an arc that has a constant radius with the centre of rotation of the arc centred on a pivot point around which the shroud (1) may rotate when the clamp mechanism (8) is unclamped, and the positions at which the inner leaf (15b) are attached to the outer leaf lie along an arc with a larger radius that is also centred on the pivot point so as to be parallel to the slot.

3. A steering column assembly according to claim 1 or claim 2 in which the inner leaf is only connected to the outer leaf (15a) at points that lie along that one path, so that the inner leaf (15b) forms a flap that can be bent or hinged away from the outer leaf (15a) as the clamp mechanism (8) is clamped.

4. A steering column assembly according to any preceding claim in which an edge of the inner leaf (15b) that is on the opposite side of the slot in the inner leaf (15b) to the positions at which the inner leaf (15b) is secured is bent over to hook around a corresponding edge of the outer leaf (15a).

5. A steering column assembly according to any preceding claim in which the path along which the inner leaf (15b) is attached to the outer leaf (15a) is located on the side of the slot in the outer leaf (15a) that faces away from the steering wheel.

6. A steering column assembly according to any preceding claim in which the slot in the outer leaf (15a) is in register with the slot in the inner leaf (15b) but wider than the slot in the inner leaf (15b).

7. A steering column assembly according to any preceding claim in which the base of the U shaped bracket is located above the steering column shroud (1) with the arms depending vertically downwards such that the U-shape is inverted.

8. A steering column assembly according to any preceding claim in which the outer leaf (15a) of the one arm has a greater rigidity than the inner leaf (15b) so that in use there is no significant deflection of the outer leaf (15a) as the clamp mechanism is clamped.

9. A mounting bracket (9) for a steering column assembly comprising a generally U-shaped member with two depending bracket arms extending from a main body so as to in use embrace a portion of a column shroud (1) of the steering column assembly, and in which the clamp mechanism (8) when in the clamped position squeezes the two arms of the U-shaped member together thereby clamping the steering column shroud (1) in position, in which one arm comprises an outer leaf (15a) that depends from the main body and an inner leaf (15b) which is fixed to the inside of the outer leaf (15a) facing the opposing arm, wherein the inner leaf (15b) and outer leaf (15a) each include a respective vertical slot along which a portion of the clamp mechanism can move when the clamp mechanism (8) is unclamped, and in which the inner leaf (15b) is secured to the inside of the outer leaf (15a) at two or more positions that are offset to one side of the slot and **characterised in that** each of the two or more positions are each arranged vertically offset from one another such that the two or more positions lie on a path that is exactly parallel, or that lies within a range of +/- 10 degrees of being parallel, to the slot.

10. A mounting bracket (9) according to claim 9 in which the slot in the inner leaf (15b) is curved in an arc that has a constant radius with the centre of rotation of the arc centred on a pivot point around which the shroud (1) may rotate when the clamp mechanism is unclamped, and the positions at which the inner leaf (15b) are attached to the outer leaf (15a) may lie along an arc with a larger radius that is also centred on the pivot point so as to be parallel to the slot. By this we mean that each point on the curved path is at a fixed normal distance from the slot.

## Patentansprüche

1. Lenksäulenanordnung, umfassend eine Lenksäulenverkleidung (1), die eine Lenkwelle (2) für ein Lenkrad umgibt, einen Befestigungshalter (9), der in seiner Position bezüglich eines Teils des Fahrzeugs befestigt ist, und einen Klemmmechanismus (8), der zwischen einer festgeklemmten Position, in der der Klemmmechanismus (8) die Verkleidung (1) in ihrer Position bezüglich des Befestigungshalters (9) befestigt, und einer freigegebenen Position, in der der Klemmmechanismus (8) eine Bewegung der Verkleidung (1) bezüglich des Befestigungshalters (9) gestattet, beweglich ist, wobei der Befestigungshalter (9) ein allgemein U-förmiges Glied umfasst, wobei sich zwei herabhängende Halterarme des U von einem Hauptkörper vertikal nach unten erstrecken, um einen Teil der Säulenverkleidung (1) zu umgreifen, und wobei der Klemmmechanismus (8), wenn er sich in der festgeklemmten Position befindet, die beiden Arme (15, 16) des U-förmigen Glieds zusammendrückt, wodurch die Lenksäulenverkleidung (1) in ihrer Position festgeklemmt wird, wobei ein Arm ein äußeres Blatt (15a), das von dem Hauptkörper herabhängt, und ein inneres Blatt (15b), das an der Innenseite des äußeren Blatts, die zu dem gegenüberliegenden Arm weist, befestigt ist, aufweist,
wobei das innere Blatt (15b) und das äußere Blatt (15a) jeweils einen vertikalen Schlitz (13, 14) aufweisen, entlang dem sich ein Teil des Klemmmechanismus (8) bewegen kann, wenn der Klemmmechanismus (8) freigegeben ist, und wobei das innere Blatt (15b) an zwei oder mehr Stellen, die zu einer Seite des Schlitzes versetzt sind, an der Innenseite des äußeren Blatts (15a) fixiert ist, und **dadurch gekennzeichnet, dass** die zwei oder mehr Stellen jeweils vertikal voneinander versetzt angeordnet sind, so dass die zwei oder mehr Stellen auf einer Bahn liegen, die genau parallel, oder die in einem Bereich von +/- 10 Grad der Parallelität, zu dem Schlitz verläuft.

2. Lenksäulenanordnung nach Anspruch 1, wobei der Schlitz in dem inneren Blatt (15b) in einem Bogen gekrümmt ist, der einen kontanten Radius aufweist, wobei die Drehmitte des Bogens auf einem Drehpunkt zentriert ist, um den sich die Verkleidung (1) drehen kann, wenn der Klemmmechanismus (8) freigegeben ist, und die Stellen, an denen das innere Blatt (15b) an dem äußeren Blatt befestigt ist, entlang einem Bogen mit einem größeren Radius liegen, der auch auf dem Drehpunkt zentriert ist, so dass er parallel zu dem Schlitz ist.

3. Lenksäulenanordnung nach Anspruch 1 oder Anspruch 2, wobei das innere Blatt nur an Punkten mit dem äußeren Blatt (15a) verbunden ist, die entlang einer Bahn liegen, so dass das innere Blatt (15b) eine Klappe bildet, die von dem äußeren Blatt (15a) weggebogen oder -geklappt werden kann, wenn der Klemmmechanismus (8) festgeklemmt ist.

4. Lenksäulenanordnung nach einem vorhergehenden Anspruch, wobei ein Rand des inneren Blatts (15b), der sich auf der gegenüberliegenden Seite des Schlitzes in dem inneren Blatt (15b) bezüglich der Stellen, an denen das innere Blatt (15b) fixiert ist, befindet, umgebogen ist, um einen entsprechenden Rand des äußeren Blatts (15a) zu umgreifen.

5. Lenksäulenanordnung nach einem vorhergehenden Anspruch, wobei sich die Bahn, entlang der das innere Blatt (15b) an dem äußeren Blatt (15a) befestigt ist, auf der Seite des Schlitzes in dem äußeren Blatt (15a) befindet, die von dem Lenkrad weg weist.

6. Lenksäulenanordnung nach einem vorhergehenden Anspruch, wobei der Schlitz in dem äußeren Blatt (15a) mit dem Schlitz in dem inneren Blatt (15b) in Deckung ist, aber breiter als der Schlitz im inneren Blatt (15b) ist.

7. Lenksäulenanordnung nach einem vorhergehenden Anspruch, wobei sich die Basis des U-förmigen Halters über der Lenksäulenverkleidung (1) befindet, wobei die Arme vertikal nach unten hängen, so dass die U-Form umgedreht ist.

8. Lenksäulenanordnung nach einem vorhergehenden Anspruch, wobei das äußere Blatt (15a) des einen Arms eine größere Steifigkeit als das innere Blatt (15b) aufweist, so dass im Gebrauch keine signifikante Durchbiegung des äußeren Blatts (15a) vorliegt, wenn der Klemmmechanismus festgeklemmt ist.

9. Befestigungshalter (9) für eine Lenksäulenanordnung, umfassend ein allgemein U-förmiges Glied, wobei sich zwei herabhängende Halterarme von einem Hauptkörper erstrecken, um im Gebrauch einen Teil einer Säulenverkleidung (1) der Lenksäulenanordnung zu umgreifen, und wobei der Klemmmechanismus (8), wenn er sich in der festgeklemmten Position befindet, die beiden Arme des U-förmigen Glieds zusammendrückt, wodurch die Lenksäulenverkleidung (1) in ihrer Position festgeklemmt wird, wobei ein Arm ein äußeres Blatt (15a), das von dem Hauptkörper herabhängt, und ein inneres Blatt (15b), das an der Innenseite des äußeren Blatts (15a), die zu dem gegenüberliegenden Arm weist, befestigt ist, aufweist, wobei
das innere Blatt (15b) und das äußere Blatt (15a) jeweils einen vertikalen Schlitz aufweisen, entlang dem sich ein Teil des Klemmmechanismus bewegen kann, wenn der Klemmmechanismus (8) freigegeben ist, und wobei das innere Blatt (15b) an zwei oder mehr Stellen, die zu einer Seite des Schlitzes versetzt sind, an der Innenseite des äußeren Blatts (15a) fixiert ist, **dadurch gekennzeichnet, dass** die zwei oder mehr Stellen jeweils vertikal voneinander versetzt angeordnet sind, so dass die zwei oder mehr Stellen auf einer Bahn liegen, die genau parallel, oder die in einem Bereich von +/- 10 Grad der Parallelität, zu dem Schlitz verläuft.

10. Befestigungshalter (9) nach Anspruch 9, wobei der Schlitz in dem inneren Blatt (15b) in einem Bogen gekrümmt ist, der einen konstanten Radius aufweist, wobei die Drehmitte des Bogens auf einem Drehpunkt zentriert ist, um den sich die Verkleidung (1) drehen kann, wenn der Klemmmechanismus freigegeben ist, und die Stellen, an denen das innere Blatt (15b) an dem äußeren Blatt (15a) befestigt ist, entlang einem Bogen mit einem größeren Radius liegen, der auch auf dem Drehpunkt zentriert ist, so dass er parallel zu dem Schlitz ist. Damit gemeint ist, dass sich jeder Punkt auf der gekrümmten Bahn in einem festgelegten normalen Abstand von dem Schlitz befindet.

## Revendications

1. Ensemble de colonne de direction comprenant une gaine de colonne de direction (1) qui entoure un arbre de direction (2) pour un volant de direction, un support de montage (9) qui est fixé en position par rapport à une partie du véhicule, et un mécanisme de serrage (8) qui est mobile entre une position serrée dans laquelle le mécanisme de serrage (8) fixe la gaine (1) en position par rapport au support de montage (9) et une position relâchée dans laquelle le mécanisme de serrage (8) permet le mouvement de la gaine (1) par rapport au support de montage (9), le support de montage (9) comprenant un élément généralement en forme de U avec deux bras de support pendants du U s'étendant verticalement vers le bas à partir d'un corps principal pour embrasser une partie de la gaine de colonne (1), et le mécanisme de serrage (8), lorsqu'il est dans la position serrée, comprimant ensemble les deux bras (15, 16) de l'élément en forme de U, serrant ainsi la gaine de colonne de direction (1) en position, un bras comprenant une feuille extérieure (15a) qui pend du corps principal et une feuille intérieure (15b) qui est fixée à l'intérieur de la feuille extérieure faisant face au bras opposé,
la feuille intérieure (15b) et la feuille extérieure (15a) comprenant chacune une fente verticale (13, 14) respective le long de laquelle une partie du mécanisme de serrage (8) peut se déplacer lorsque le mécanisme de serrage (8) est desserré, et la feuille intérieure (15b) étant fixée à l'intérieur de la feuille extérieure (15a) au niveau de deux positions ou plus qui sont décalées d'un côté de la fente, et **caractérisé en ce que** chacune des deux positions ou plus est décalée verticalement l'une par rapport à l'autre de sorte que les deux positions ou plus se trouvent sur un chemin qui est exactement parallèle, ou qui se trouve dans une plage de +/- 10 degrés de parallélisme, à la fente.

2. Ensemble de colonne de direction selon la revendication 1, la fente dans la feuille intérieure (15b) étant incurvée en un arc qui a un rayon constant, le centre de rotation de l'arc étant centré sur un point de pivotement autour duquel la gaine (1) peut tourner lorsque le mécanisme de serrage (8) est desserré, et les positions auxquelles la feuille intérieure (15b) est fixée à la feuille extérieure se trouvant le long d'un arc avec un rayon plus grand qui est également centré sur le point de pivotement de sorte à être parallèle à la fente.

3. Ensemble de colonne de direction selon la revendication 1 ou la revendication 2, la feuille intérieure n'étant reliée à la feuille extérieure (15a) qu'au niveau de points qui se trouvent le long de ce chemin, de sorte que la feuille intérieure (15b) forme un volet qui peut être plié ou articulé à l'opposé de la feuille extérieure (15a) lorsque le mécanisme de serrage (8) est serré.

4. Ensemble de colonne de direction selon l'une quelconque des revendications précédentes, un bord de la feuille intérieure (15b) qui se trouve sur le côté opposé de la fente dans la feuille intérieure (15b) par rapport aux positions auxquelles la feuille intérieure (15b) est fixée étant replié pour s'accrocher autour d'un bord correspondant de la feuille extérieure (15a).

5. Ensemble de colonne de direction selon l'une quelconque des revendications précédentes, le chemin le long duquel la feuille intérieure (15b) est fixée à la feuille extérieure (15a) étant situé sur le côté de la fente dans la feuille extérieure (15a) qui fait face à l'opposé du volant de direction.

6. Ensemble de colonne de direction selon l'une quelconque des revendications précédentes, la fente de la feuille extérieure (15a) correspondant à la fente dans la feuille intérieure (15b) mais étant plus large que la fente dans la feuille intérieure (15b).

7. Ensemble de colonne de direction selon l'une quelconque des revendications précédentes, la base du support en forme de U étant située au-dessus de la gaine de colonne de direction (1), les bras pendant verticalement vers le bas de sorte que la forme en U soit inversée.

8. Ensemble de colonne de direction selon l'une quelconque des revendications précédentes, la feuille extérieure (15a) du bras ayant une plus grande rigidité que la feuille intérieure (15b) de sorte que lors de l'utilisation il n'y ait pas de déflexion significative de la feuille extérieure (15a) lorsque le mécanisme de serrage est serré.

9. Support de montage (9) pour un ensemble de colonne de direction comprenant un élément généralement en forme de U avec deux bras de support pendants s'étendant à partir d'un corps principal de sorte à embrasser, lors de l'utilisation, une partie d'une gaine de colonne (1) de l'ensemble de colonne de direction, et le mécanisme de serrage (8), lorsqu'il est dans la position serrée, comprimant ensemble les deux bras de l'élément en forme de U l'un contre l'autre, serrant ainsi la gaine de colonne de direction (1) en position, un bras comprenant une feuille extérieure (15a) qui pend du corps principal et une feuille intérieure (15b) qui est fixée à l'intérieur de la feuille extérieure (15a) faisant face au bras opposé,
la feuille intérieure (15b) et la feuille extérieure (15a) comprenant chacune une fente verticale respective le long de laquelle une partie du mécanisme de serrage peut se déplacer lorsque le mécanisme de serrage (8) est desserré, et la feuille intérieure (15b) étant fixée à l'intérieur de la feuille extérieure (15a) au niveau de deux positions ou plus qui sont décalées d'un côté de la fente, et **caractérisé en ce que** chacune des deux positions ou plus est décalée verticalement l'une par rapport à l'autre de sorte que les deux positions ou plus se trouvent sur un chemin qui est exactement parallèle, ou qui se trouve dans une plage de +/- 10 degrés de parallélisme, à la fente.

10. Support de montage (9) selon la revendication 9, la fente dans la feuille intérieure (15b) étant incurvée en un arc qui a un rayon constant, le centre de rotation de l'arc étant centré sur un point de pivotement autour duquel la gaine (1) peut tourner lorsque le mécanisme de serrage est desserré, et les positions au niveau desquelles la feuille intérieure (15b) est fixée à la feuille extérieure (15a) pouvant se trouver le long d'un arc avec un rayon plus grand qui est également centré sur le point de pivotement de sorte à être parallèle à la fente. Chaque point de la trajectoire courbe se trouve ainsi à une distance normale fixe de la fente.
